# EUROPÄISCHE PATENTANMELDUNG

(11) **EP 0 782 357 A2**
(43) Veröffentlichungstag der Anmeldung: **02.07.1997**
(21) Anmeldenummer: 96119486.7
(22) Anmeldetag: 04.12.1996
(51) Int. Cl.: H04Q 7/32, H04Q 7/22

(54) **Übertragung von auf einem sensitiven Display aufgeschriebenen asiatischen Schriftzeichen über den Kurz-Nachrichten-Dienst eines Mobilfunknetzes**

(30) Priorität: 29.12.1995 DE 19549058
(71) Anmelder: SIEMENS AKTIENGESELLSCHAFT, 80333 München (DE)
(72) Erfinder: Stelzer, Manfred, 81369 München (DE)

(57) **Zusammenfassung**

Die Übertragung alphanumerischer Zeichen über derartige Kurz-Nachrichten-Dienste ist bekannt. Im Hinblick auf die weitere Ausbreitung des Mobilfunks in den asiatischen und nordafrikanischen Ländern wird ein Verfahren zur Übertragung der dort üblichen Schriftzeichen vorgeschlagen, bei dem diese Schriftzeichen mittels eines handgeführten Griffels auf ein sensitives Displays des Mobilfunkgerätes übertragen und von diesem entsprechende Signale erzeugt und direkt oder nach Zwischenspeicherung ausgesendet werden.

## Beschreibung

Die Erfindung betrifft ein Verfahren entsprechend dem Oberbegriff des Anspruchs 1.

Beim digitalen Mobilfunk, beispielsweise im 900 MHz-Frequenzband ist es bekannt, kurze Nachrichten aus einer begrenzten Anzahl von alphanumerischen Zeichen als sogenannter Kurz-Nachrichten-Dienst oder Short-Message-Service über den Signalisierungskanal des Festnetzes und den Signalisierungskanal der Funkschnittstelle des Mobilfunknetzes von und zu Mobilfunkgeräten zu übertragen. Bei Empfang derartiger Nachrichten können diese im Display des Mobilfunkgerätes dargestellt werden, während das Aussenden von Nachrichten mittels der Tastatur des Mobilfunkgerätes oder über ein der Zentrale des Mobilfunknetzes zugeordnetes Servicezentrum erfolgt.

Im Hinblick auf die weitere Ausbreitung des Mobilfunks, insbesondere in die asiatischen und nordafrikanischen Länder, besteht der Wunsch auch dort einen Kurz-Nachrichten-Dienst einzurichten. Für diesen Kurz-Nachrichten-Dienst müßten jedoch asiatische Schriftzeichen übertragen werden, die sich von den alphanumerischen Zeichen durch ihre Vielzahl von mehreren tausend Zeichen in einer Sprache unterscheiden.

Die Aufgabe besteht nun darin, eine Möglichkeit zur Übertragung einer für Kurz-Nachrichten-Dienste ausreichende Anzahl von Schriftzeichen asiatischer Sprachen zu finden.

Erfindungsgemäß wird die Aufgabe dadurch gelöst, daß das eingangs erwähnte Verfahren durch die Merkmale des Kennzeichens des Patentanspruchs 1 weitergebildet ist.

Das erfindungsgemäße Verfahren bietet den Vorteil der Einfachheit, Schnelligkeit und Übersichtlichkeit, da es den Schreibgewohnheiten der Benutzer entgegenkommt und diese keinerlei Kenntnisse über systeminterne Parameter benötigen. Bevorzugte Ausbildungen des erfindungsgemäßen Verfahrens sind in den Patentansprüchen 2 bis 13 näher beschrieben.

Die Erfindung soll im folgenden anhand eines Ausführungsbeispieles näher erläutert werden. Das Ausführungsbeispiel betrifft ein Mobilfunkgerät für digitalen Mobilfunk in 900 MHz-Frequenzband mit einer zusätzlichen Einrichtung für den Kurz-Nachrichten-Dienst und entspricht damit zunächst weitgehend den bereits handelsüblichen Mobilfunkgeräten, mit denen alphanumerische Zeichen übertragen werden können.

Zur Durchführung des erfindungsgemäßen Verfahrens enthält das Mobilfunkgerät zusätzlich wahlweise ein sensitives Display oder voneinander getrennt ein sensitives Feld und ein grafikfähiges Display. Die Sensitivität des Displays oder des entsprechenden Feldes kann dabei darin bestehen, daß es entweder druckempfindlich oder wärmeempfindlich oder magnetischempfindlich oder optischempfindlich oder elektrostatisch empfindlich ist. Auf dieses Display oder das entsprechende an anderer Stelle am Mobilfunkgerät angebrachte sensitive Feld wird zur Eingabe mittels eines handgeführten Griffels geschrieben, wobei die Spitze des Griffels der Sensitivität des Displays entsprechend ausgebildet ist, also beispielsweise einen dünnen Lichtstrahl aussendet. An das sensitive Feld oder das sensitive Display sind Einrichtungen zur Signalverarbeitung und Schriftzeichenerkennung angeschlossen, die beispielsweise miteinander in einer anwenderspezifischen integrierten Schaltung integriert sind. Die entsprechenden Signale können je nach Übertragungskapazität des für den Kurz-Nachrichten-Dienst vorgesehenen Übertragungskanals entweder direkt oder nach einer Zwischenspeicherung ausgesendet werden. Bei der sendeseitigen Verarbeitung können die Schriftzeichen oder der entsprechende Satz als Grafikdatei aufgefaßt und mit den für Grafikdateien bekannten Algorithmen komprimiert werden. Der besondere Vorteil des erfindungsgemäßen Verfahrens wird hier deutlich, da nicht nur asiatische Schriftzeichen sondern auch alphanumerische Zeichen und Zahlen in beliebiger Folge kombiniert übertragen werden können, es können auch Zeichnungen oder Skizzen oder Unterschriften übertragen werden.

Die Übertragung von Grafikdateien mittels des erfindungsgemäßen Verfahrens ist beliebig weit ausbaubar, da bei einer Weiterbildung der Erfindung auch die Grafikformate wählbar sind und zur Erweiterung der darstellbaren Fläche das von Personalcomputern her bekannte 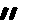 zoomen" oder 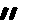 scrollen" angewendet werden kann.

Das beschriebene Verfahren kann nicht nur im jeweiligen Endgerät des Mobilfunknetzes, also im Mobilfunkgerät selbst durchgeführt werden, es ist in vorteilhafter Weise auch in der Zentrale des Mobilfunknetzes anwendbar.

Im Hinblick auf Schnittstellen zwischen einem elektrischen oder optischen Festnetz und einem Funknetz kann es von Vorteil sein, das erfindungsgemäße Verfahren auch für Telekommunikationsgeräte des jeweiligen Festnetzes anzuwenden. Das beschriebene Verfahren kann dabei durch Anpassung eines bereits bestehenden Kurz-Nachrichten-Dienstes erfolgen oder im Rahmen eines anderen Dienstes zur Übertragung von schriftlichen Nachrichten an Telefonendgeräte.

Im Zuge der Verbilligung von Farbdisplays kann von der Darstellung in Schwarzweiß auf die Darstellung in Farbe übergegangen werden, wobei jedoch im Hinblick auf die dafür benötigte Übertragungsbandhreite der Kanal des Kurz-Nachrichten-Dienstes des Mobilfunknetzes entsprechend geeignet sein muß.

Bei einer im Hinblick auf die steigende Verbreitung von Personalcomputern wichtigen Weiterbildung des erfindungsgemäßen Verfahrens erfolgt die grafische Eingabe mittels Personalcomputer entweder durch Einscannen einer Papiervorlage oder durch Einscannen über eine Kamera, eine sensitive Fläche am Personalcomputer oder einen separaten Scanner, wobei die eingegebenen Grafiken an andere Mobilfunkgeräte oder an ein Service-Center des Mobilfunknetzes übertragen werden. Die empfangene Kurznachricht wird wahlweise im Mobilfunkgerät gespeichert oder direkt an einen Personalcomputer oder ein Faxgerät ausgegeben. Die Ausgabe erfolgt dabei entweder nach Anschluß des Mobilfunkgerätes an den Personalcomputer oder nach Umsetzung der Kurznachricht in ein sogenanntes 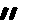 Short Fax" auf dem Display des Mobilfunkgerätes oder der Zentrale des Mobilfunknetzes.

Im Hinblick auf den erhöhten Aufwand kann es zweckmäßig sein, das erfindungsgemäße Verfahren als teilnehmerindividuelles Leistungsmerkmal nur bestimmten Teilnehmern des Telekommunikationsnetzes zuzuordnen.

## Patentansprüche

1. Verfahren zur Übertragung von Schriftzeichen über den Kurz-Nachrichten-Dienst eines Mobilfunknetzes unter Zuhilfenahme des Displays eines Mobilfunkgerätes,
**dadurch gekennzeichnet,**
daß zur Übertragung von insbesondere asiatischer Schriftzeichen diese per Hand über ein sensitives Display des Mobilfunkgerätes eingegeben und anschließend vom Mobilfunkgerät entsprechende Signale direkt oder nach Zwischenspeicherung ausgesendet werden.

2. Verfahren nach Anspruch 1,
**dadurch gekennzeichnet,**
daß die Eingabe mittels eines handgeführten Griffels erfolgt, durch den die Schriftzeichen auf das Display geschrieben werden.

3. Verfahren nach Ansprüchen 1 oder 2,
**dadurch gekennzeichnet,**
daß das Display druckempfindlich ist.

4. Verfahren nach Ansprüchen 1 oder 2,
**dadurch gekennzeichnet,**
daß das Display wärmeempfindlich ist.

5. Verfahren nach Ansprüchen 1 oder 2,
**dadurch gekennzeichnet,**
daß das Display magnetisch empfindlich ist.

6. Verfahren nach Ansprüchen 1 oder 2,
**dadurch gekennzeichnet,**
daß das Display optisch empfindlich ist.

7. Verfahren nach Ansprüchen 1 bis 6,
**dadurch gekennzeichnet,**
daß anstelle des sensitiven Displays getrennt voneinander ein sensitives Feld und ein unsensitives Display vorgesehen sind.

8. Verfahren nach Ansprüchen 1 oder 2,
**dadurch gekennzeichnet,**
daß das Display elektrostatisch empfindlich ist.

9. Verfahren nach Ansprüchen 1 bis 7,
**dadurch gekennzeichnet,**
daß die jeweils auszusendenden Signale vorzugsweise mittels eines Paßwortes verschlüsselt und empfangsseitig entschlüsselt werden.

10. Verfahren nach Ansprüchen 1 bis 9,
**dadurch gekennzeichnet,**
daß das erfindungsgemäße Verfahren als teilnehmerindividuelles Leistungsmerkmal Teilnehmern des Telekommunikationsnetzes zugeordnet werden kann.

11. Verfahren nach Anspruch 1,
**dadurch gekennzeichnet,**
daß die grafische Eingabe von Schriftzeichen mittels eines Personalcomputers erfolgt.

12. Verfahren nach Anspruch 11,
**dadurch gekennzeichnet,**
daß die grafische Eingabe durch Einscannen einer Papiervorlage oder mittels einer Kamera oder einer sensitiven Fläche des Personalcomputers erfolgt.

13. Verfahren nach Anspruch 1,
**dadurch gekennzeichnet,**
daß die empfangene Kurznachricht wahlweise im Mobilfunkgerät gespeichert oder direkt an einen Personalcomputer oder ein Faxgerät ausgegeben, wobei die Kurznachricht nach Umwandlung in ein sogenanntes Kurzfax oder 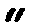 Short Fax" auf dem Display des Mobilfunkgerätes oder der Zentrale des Mobilfunknetzes dargestellt wird.
